# EUROPEAN PATENT APPLICATION

(11) **EP 4 447 037 A1**
(43) Date of publication of application: **16.10.2024**
(21) Application number: 23168340.0
(22) Date of filing: 17.04.2023
(51) Int. Cl.: G10K 11/00, B63B 21/26, G01V 1/16, B63B 21/00

(54) **UNDERWATER ANTI-DRAGGING MOORING SYSTEM FOR ACOUSTIC RECEIVERS**

(30) Priority: 12.04.2023 PT 2023118601
(71) Applicant: Faculdade De Ciências da Universidade de Lisboa, 1749-016 Lisboa (PT); Universidade de Évora, 7000-803 Évora (PT)
(72) Inventor: ENGEITADO ALEXANDRE, CARLOS MANUEL, SETÚBAL (PT); SILVA RUIVO QUINTELLA, BERNARDO, ALCABIDECHE (PT); RAPOSO DE ALMEIDA, PEDRO MIGUEL, LISBOA (PT); REGO DA SILVA, SARA SOFIA, LISBOA (PT); LINO COSTA, JOSÉ, LISBOA (PT)
(74) Representative: do Nascimento Gomes, Rui

(57) **Abstract**

It is described an underwater anti-dragging system for acoustic receivers. The system comprises a metal alloy frame comprising a base (1) for promoting fixation to an underwater substrate, a storage cell (2), adapted to enclose an acoustic receiver, and a protective arched structure (3) inside which the storage cell (2) is positioned. Such configuration therefore prevents the system from being dragged by the action of external agents, such as bottom operating fishing gears and coastal waves. The present application also relates to a monitoring system, comprising the underwater anti-dragging system described and acoustic receivers.

## Description

### FIELD OF THE APPLICATION

The present application is generally enclosed in the field of environmental monitoring. More particularly, this application relates to underwater mooring systems for the deployment of acoustic biotelemetry receivers.

### PRIOR ART

Acoustic receiver arrays are becoming a common and widespread solution for monitoring the behaviour and movement patterns of aquatic animals within technical and scientific studies, being frequently deployed in several environments, with different characteristics, from freshwater to marine ecosystems.

However, the deployment and maintenance of these devices are often affected by some constraints (e.g., unstable, and unsafe mooring and fixation conditions; dragging; robbery and vandalism acts) that can affect the durability of these systems and, ultimately, result in the total loss of the equipment and collected data.

One of the main problems for the safety of these acoustic receiver arrays results from the necessity to deploy them in areas with intense pressure from fishing activities. Particularly, when fishermen use bottom dragging gears, including nets and cables supported by increasingly strong and resistant haulers, these systems have enough power to pull and remove the mooring systems commonly used to fix acoustic receivers to the river, estuary or sea bottom.

The state-of-the-art mooring systems in locations where navigation buoys are not present are normally composed of a submerged buoy and a cable fix to an anchor/weight that is deployed on the bottom. For most of the times the weight used (typically less than 150 kg to be maneuverer without expensive logistics) is unable to prevent or at least diminish the probability of these systems being dragged by fishing gears or ripped by coastal hydrodynamics depending on the different ecosystems where they may be deployed (i.e., river, estuary, sea).

To avoid this issue, and considering the current state-of-the-art, biotelemetry acoustics receivers used in fish monitoring studies, and the respective mooring systems, are usually deployed in areas were the probability to be entangled with fishing gears is minimized by placing the equipment in more complex rocky substrate and specifically in locations that are more protected (bottom morphology). This option normally reduces the locations available for the deployment, and the detection range of the receiver, i.e., the capacity of the receiver to detect a signal sent by a transmitter implanted in an aquatic animal that moves in the vicinity (typically < 1000 m) of the deployment location.

Also, to avoid the dragging associated with waves breaking in shallower areas (< 15 m depth), the receivers are frequently deployed on deeper areas (> 20 m) and maintained with the help of scuba divers, making the required manual data download operations more expensive and dangerous. On deeper habitats the state-of-the-art solutions are to equip the receivers with acoustic releasers, i.e., remotely operated mechanical hook controlled through the water column and using acoustic waves communication channel. However, for the receivers to come to the surface to be recovered, after the mechanical detachment, it needs to be attached to a mooring system with buoys for positive buoyancy and, for that reason, subjected to be dragged by fishing gears or waves in coastal shallower areas.

The present solution intended to innovatively overcome such issue.

### SUMMARY

It is therefore an object of the present application an underwater anti-dragging system for acoustic receivers. The system comprises an alloy frame comprising a base for promoting fixation to the underwater substrate, a storage cell, adapted to enclose an acoustic receiver, and a protective arched structure inside which the storage cell is positioned.

Such configuration therefore prevents the system from being dragged by the action of external agents, such as bottom operating fishing gears and coastal waves.

The present application also relates to a monitoring system, comprising the underwater anti-dragging system described and acoustic receivers.

### DESCRIPTION OF FIGURES

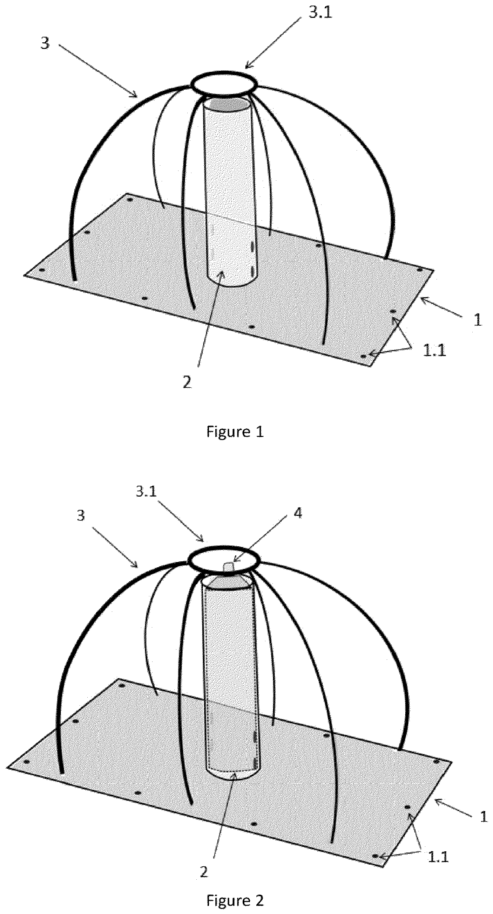

Figure 1 - representation of an embodiment of the underwater anti-dragging mooring system of the present application; the reference signs represent:
   1 - base;
   1.1 - fixation means of the base, to fix the base to an underwater surface;
   2 - storage cell;
   3 - protective arched structure;
   3.1 - protective structure opening.
Figure 2 - illustration of an embodiment of the anti-dragging mooring system of the present application enclosing an acoustic receiver inside the storage cell; the reference signs represent:
   1 - base;
   1.1 - fixation means of the base, to fix the base to an underwater surface;
   2 - storage cell;
   3 - protective arched structure;
   3.1 - protective structure opening;
   4 - acoustic receiver.

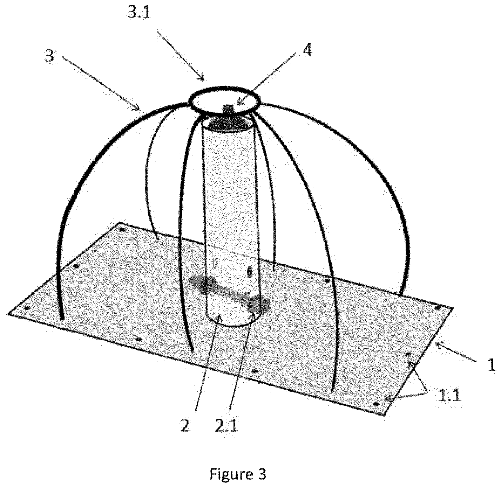

Figure 3 - representation of an embodiment of the underwater anti-dragging mooring system of the present application illustrating the fixation of the acoustic receiver to the interior walls of the storage cell; the reference signs represent:
   1 - base;
   1.1 - fixation means of the base, to fix the base to an underwater surface;
   2 - storage cell;
   2.1- fixation means of the storage cell, to fix the acoustic receiver to the interior walls of the cell's chamber.
   3 - protective arched structure;
   3.1 - protective structure opening;
   4 - acoustic receiver.

### DETAILED DESCRIPTION

The more general and advantageous configurations of the present application are described in the Summary. Such configurations are detailed below in accordance with other advantageous and/or preferred embodiments of implementation of the system described herein.

In one embodiment of the underwater anti-dragging mooring system of the present application, it is comprised by:
- An alloy frame comprising:
   - a base (1) provided with fixation means adapted to fix the base to an underwater surface;
   - at least one storage cell (2) having an interior chamber adapted to enclose an acoustic receiver (4); and
   - at least one protective arched structure (3) inside which the at least one storage cell (2) is positioned.

Considering the underwater scenario in which the system will be installed, the frame being of an alloy such as stainless steel, ensures resistance to mechanical forces and corrosion.

The storage cell (2) has an interior chamber where, through an opening, an acoustic receiver (4) can be inserted, keeping it enclosed and protected from the outside environment surrounding the system.

In addition, the arched configuration of the protective structure (3) provides the system with an outer rounded surface, i.e., devoid of intersections or vertices likely to create blocking/fixation points that potentially may subject the system to being dragged by the action of external agents. Specifically, such arched configuration allows to prevent or, at least, significantly diminish the risk of the system being dragged by bottom operating fishing gears.

In one embodiment of the system, the protective arched structure (3) is a curvilinear rod structure formed by a plurality of intersecting arcs. The arcs may extend from the base (1) and intersect each other forming an opening (3.1) at the top of the protective structure (3). Such opening (3.1) provides easy access to the storage cell (2), allowing the acoustic receiver (4) to be introduced into the storage cell (2) during installation, and its removal for maintenance and data download operations or uninstallation purposes. In this way, easy access to the acoustic receiver (4) by a technician is guaranteed, without compromising the purpose and protective effectiveness of the system, or without having to bring the structure back to the surface in each maintenance operation. For this purpose, in a particularly advantageous embodiment, the storage cell (2) is positioned centrally, i.e., aligned, with respect to the opening (3.1) of the protective structure (3).

In another embodiment of the system, the base (1) of the frame is a flat surface. Considering that the system will be installed in an underwater environment, whose substrate is typically a hard bottom, the fact that it has a flat base (and not irregular, for example) ensures proper fixation and stabilization of the system.

In another embodiment of the system, the fixation means (1.1) of the base (1) comprises holes provided on said surface and fastener means. Said fastener means are adapted to fix the base (1) to the underwater substrate, and may be of screw, such as chemical bushing type screws, or bolt type, like anchor type bolts.

In another embodiment of the system, the storage cell (2) comprises fixation means (2.1) adapted to fix the acoustic receiver (4) within the interior chamber of the cell (2). More particularly, the fixation means (2.1) may be configured to fix the acoustic receiver (4) to at least two interior walls of the cell's chamber. This configuration is a safe way to fix the acoustic receiver (4) to the chamber of the storage cell (2), also allowing greater ease and speed in maintenance work and/or replacement of the acoustic receiver (4).

In another embodiment of the system, directly related to the previously described, the fixation means (2.1) of the storage cell (2), for example of a screw type, may be adapted to be inserted through the outer wall of the cell (2) chamber. Consequently, this configuration also reduces the likelihood of vandalism because it can only be removed with the specific tools.

In another embodiment, the storage cell (2) has a cylindrical shape. This configuration is especially advantageous for cylindrical acoustic receivers (4), allowing a better adaptation of the cell's structure to the shape of the acoustic receiver (4) and, consequently, making its protective action more effective. In this sense, the diameter and height of the cylindrical structure of the cell (2) may vary depending on the model of acoustic receiver (4) used in each case.

The present application also relates to a mooring system comprised by the underwater anti-dragging mooring system described herein, and by at least one acoustic receiver (4).

### EMBODIMENT

In a preferred embodiment of the underwater anti-dragging mooring system described in the present application, it is comprised by a protective structure (3) for each storage cell (2). Particularly, the system is comprised by a stainless-steel frame, including a base (1), one storage cell (2), adapted to receive one acoustic receiver (4), and one protective arched structure (3).

The base (1) is a flat base with holes for fixation screws or bolts that can be used in any kind of hard substrate.

The storage cell (2) has a cylinder shape, adapted to insert and protect an acoustic receiver (4), which is maintained inside this space through a fixing screw that crosses both the storage (2) cylinder and the acoustic receiver (4).

The protective structure (3) is comprised by a set of upper crossing arcs that meet above the receiver cylindrical cell (2), allowing fishing gears to pass through the system without getting stuck in the storage cell (2) and dragging the whole system. These arcs join in an open circle (3.1) at the upper end, also allowing to easily remove or replace underwater the acoustic receiver (4) without the need to dismantle the entire system or bringing it to the surface.

As will be clear to one skilled in the art, the present invention should not be limited to the embodiments described herein, and a few changes are possible which remain within the scope of the present invention.

Of course, the preferred embodiments shown above are combinable, in the different possible forms, being herein avoided the repetition all such combinations.

## Claims

1. Underwater anti-dragging mooring system comprising:
- an alloy frame comprising:
- a base (1) provided with fixation means (1.1) adapted to fix the base to an underwater surface;
- at least one storage cell (2) having an interior chamber adapted to enclose an acoustic receiver (4); and
- at least one protective arched structure (3) inside which at least one storage cell (2) is positioned.

2. The system according to claim 1, wherein the base (1) of the frame is a flat surface.

3. The system according to claim 1 or 2, wherein fixation means (1.1) of the base (1) comprises holes provided on said surface and fastener means; the fastener means being adapted to fix the base (2) to the underwater substrate.

4. The system according to claim 3, wherein, the fastener means are of a screw or bolt type; optionally, the screws are chemical bushing type screws; and optionally, the bolts are anchor type bolts.

5. The system according to any of the previous claims, wherein the storage cell (2) comprises fixation means (2.1) adapted to fix an acoustic receiver (3) within the interior chamber of the cell (2).

6. The system according to claim 5, wherein the fixation means (2.1) are configured to fix the acoustic receiver (4) to at least two interior walls of the cell's chamber.

7. The system according to claim 6, wherein the fixation means (2.1) are adapted to be inserted through the outer wall of the cell chamber.

8. The system according to any of the claims 5 to 7, wherein the fixation means (2.1) are of a screw type.

9. The system according to any of the previous claims, wherein the storage cell (2) has a cylindrical shape.

10. The system according to any of the previous claims, wherein the protective arched structure (3) is a curvilinear alloy rod structure formed by a plurality of intersecting arcs.

11. The system according to claim 10, wherein the arcs extend from the base (1) and intersect each other forming an opening (3.1) at the top of the protective structure (3); said opening (3.1) providing access to the interior of the structure (3).

12. The system according to claim 11 wherein the storage cell (2) is positioned centrally to the opening (3.1) of the protective structure (3).

13. The system according to any of the previous claims, comprising one protective structure (3) for each storage cell (2).

14. Monitoring system comprising:
- the underwater anti-dragging mooring system of any of the claims 1 to 13;
- at least one acoustic receiver (4).
